# EUROPÄISCHE PATENTSCHRIFT

(11) **EP 2 949 467 B1**
(45) Veröffentlichungstag und Bekanntmachung des Hinweises auf die Patenterteilung: **15.06.2016**
(21) Anmeldenummer: 15169516.0
(22) Anmeldetag: 28.05.2015
(51) Int. Cl.: B32B 27/08, B32B 27/18, B32B 27/30, B32B 27/32, B32B 27/34, B32B 27/42

(54) **OBERFLÄCHENSCHUTZFOLIE**
SURFACE PROTECTION FILM
FEUILLE DE PROTECTION DE SURFACE

(30) Priorität: 30.05.2014 AT 4292014
(43) Veröffentlichungstag der Anmeldung: 02.12.2015
(73) Patentinhaber: Isosport Verbundbauteile Gesellschaft m.b.H., 7000 Eisenstadt (AT)
(72) Erfinder: Gornik, Christian, 2491 Neufeld (AT); Dohe, Dieter, 49525 Lengerich (DE)
(74) Vertreter: Torggler & Hofinger Patentanwälte

(56) Entgegenhaltungen:
- EP-A1- 1 431 362
- WO-A2-2008/063411
- JP-A- H0 770 545
- Jean Marie Michel: "Contribution à l'histoire industrielle des polymères en France par Jean-Marie Michel. L'alcohol Polyvinylique (APV)", , 6. November 2008 (2008-11-06), Seiten 1-10, XP055201506, Gefunden im Internet: URL:http://www.societechimiquedefrance.fr/ IMG/pdf/b_2_210_000.vfx2_sav.pdf [gefunden am 2015-07-09]

## Beschreibung

Die Erfindung betrifft eine Klebstoff-freie Oberflächenschutzfolie, insbesondere zur Abdeckung von Kunststoffoberflächen, bestehend zumindest aus einer Adhäsionsschichtschicht und einer Trägerschicht.

Viele Bauteile sollen während des Transports und der Montage an ihren Oberflächen vor Zerkratzen geschützt werden. Derartige Bauteile sind beispielsweise Kunststoffplatten oder Kunststofffolien für die Sanitärindustrie, für die Möbelindustrie, für die Sportindustrie etc. Zu diesem Zwecke werden Oberflächenschutzfolien verwendet, welche temporär auf die Oberfläche der zu schützenden Bauteile aufgebracht werden. Viele dieser Platten oder Folien werden in ihrer Weiterverarbeitung einer thermischen Belastung ausgesetzt, so dass der Verbund aus Platte bzw. Folie mit aufgebrachter Schutzfolie Temperaturen von über 100°C aushalten muss. Eine derartige Weiterverarbeitung ist beispielsweise ein Tiefziehprozess oder ein Dekorationsprozess mittels Thermodiffusion für den das flächige Halbzeug mit samt der Schutzfolie erwärmt wird. Nach dem Umformen bzw. nach der Thermodiffusion wird der Verbund aus flächigem Halbzeug und aufgebrachter Schutzfolie wieder abgekühlt. Üblicherweise werden die Schutzfolien nach der Montage der genannten Bauteile wieder entfernt, wobei keine Kleberreste o.ä. auf den Bauteilen verbleiben sollen. Es ist bekannt, dass Klebstoff-freie Schutzfolien hinsichtlich einer rückstandsfreien Entfernung von den Bauteilen Vorteile gegenüber Schutzfolien mit konventionellen Haftklebstoffen, wie bspw. Acrylatkleber oder Naturkautschuk, haben. Als klebstoff-freie Adhäsionsschichten kommen üblicherweise Polyolefine (LDPE), Styrol-Block-Copolymere (SEBS, SEPS, SIS), thermoplastische Acrylcopolymere (M-nBA-M) oder Etyhlen-Vinyl-Acetate (EVA) unter Zugabe von adhäsionsfördernden Harzen zum Einsatz (Tackifier). Durch den Zusatz von Tackifiern wird eine permanente Erhöhung der Klebkraft erreicht.

In der Praxis wird beobachtet, dass sich bei Temperaturbelastungen über 100°C auf den Verbund von flächigem Halbzeug und klebstoff-freier Schutzfolie Bläschen in der Schicht zwischen der Oberfläche des flächigem Halbzeuges und der Schutzfolie bilden können. Die Schutzfolie löst sich punktuell von der zu schützenden Oberfläche und beim Abziehen der Schutzfolie kommt es zu partiellen Kleberrückständen auf der Oberfläche des flächigen Halbzeuges. Die Ursache in der genannten Bläschenbildung liegt in der Freiwerdung von Wasserdampf bei Temperaturen über 100°C, welcher entweder von an der Oberfläche adsorbierter Feuchtigkeit oder von der Feuchtigkeitsaufnahme des flächigen Halbzeuges herrührt. Der Wasserdampf kann aufgrund der guten Wasserdampfbarrierewirkung der eingesetzten Kunststoffe der Schutzfolie nicht entweichen, sondern bleibt zwischen Schutzfolie und zu schützender Oberfläche eingesperrt. Der Dampfdruck führt zu einer punktuellen Delamination. Bei Polyamid 12 Folien wurde beobachtet, dass durch die Dekoration mittels Thermodiffusion bei 160°C/4 min eine derartige unerwünschte Bläschenbildung auftritt.

Aus der EP 1 431 362 A1 ist eine Haftklebemasse für ein- oder beidseitig haftklebrige Klebefolienstreifen bekannt, welche sich durch dehnendes Verstrecken in der Verklebungsebene rückstandsfrei und zerstörungsfrei wieder ablösen lassen, bestehend aus einer Mischung mit mindestens einem Blcokcopolymer und mindestens einem Klebrigmacher, wobei die Mischung wenigstens ein in Wasser lösliches Polymer enthält.

Der Erfindung liegt die Aufgabe zugrunde, eine klebstoff-freie Schutzfolie zu schaffen, bei welcher auch bei Temperaturbelastungen über 100°C es zu keiner Bläschenbildung zwischen dem flächigem Halbzeug und der aufgebrachten Schutzfolie kommt.

Die Aufgabe wird durch eine Oberflächenschutzfolie mit den Merkmalen des Anspruchs 1 gelöst.

Dies geschieht, indem die Adhäsionsschicht zumindest einem Styrol-Blockcopolymer und ein Polymer enthält, wobei das Polymer Hydroxylgruppen umfasst. Hydroxylgruppen werden auch als Hydroxygruppen oder OH-Gruppen bezeichnet.

Das Polymer ist dann aufgrund seiner chemischen Struktur dazu in der Lage, die bei Temperaturerhöhung von der zu schützenden Oberfläche abgegebene Feuchtigkeit aufzunehmen und so die Bläschenbildung zu verhindern.

Als zur Verwendung als Polymer geeigneter Kunststoff hat sich Polyvinylbutyral (PVB) herausgestellt, welches sowohl mit gewissen Styrol-Block-Copolymeren mischbar ist als auch in der Lage ist, bei erhöhten Temperaturen Feuchtigkeit noch aufzunehmen.

Die Wasseraufnahme und die Löslichkeit in unpolaren Lösemitteln von Polyvinylbutyralen wird durch den Acetylierungsgrad bestimmt. Der hohe Anteil an Hydroxylgruppen bewirkt das gute Aufnahmevermögen von Feuchtigkeit sowie die gute Kompatibilität mit anderen polaren Kunststoffen.

Die Erfindung kann bei allen diskutierten Anwendungsfällen eingesetzt werden.

Bevorzugte Weiterbildungen der Erfindung sind in den abhängigen Ansprüchen angegeben.

In einer bevorzugten Ausführungsform kann das Polymer zwischen 5 % und 50 %, bevorzugt zwischen 10 % und 30 % und besonders bevorzugt zwischen 14 % und 21 %, an Hydroxylgruppen umfassen. Die Prozentangaben für die Anteile der Hydroxylgruppen sind Gewichtsprozent.

Es kann ein relativ geringer Prozentsatz an verträglichem Polymer in der Adhäsionsschicht ausreichen. Dies kann ein Anteil zwischen 3 % und 20 %, bevorzugt zwischen 7 % und 15 % und besonders bevorzugt zwischen 9 % und 11 % sein.

Ein weiterer Vorteil in der Verwendung von PVB als Zusatz in Styrol-Block-Copolymeren ist, dass auch die Mischung transparent bleibt. Bei Verwendung von Ethylen-Vinylalkohol-Copolymer (EVOH), welcher auch einen Anteil an Hydroxylgruppen aufweist, kommt es in Styrol-Block-Copolymeren zu einer Eintrübung, welche in vielen Fällen unerwünscht ist. In den meisten Fällen ist nämlich eine transparente Schutzfolie gewünscht.

Weitere Vorteile und Einzelheiten der Erfindung sind an den Figuren sowie der dazugehörigen Figurenbeschreibung ersichtlich. Dabei zeigen:
- Fig. 1: den Schichtenaufbau einer erfindungsgemäßen Oberflächenschutzfolie,
- Fig. 2: einen Schichtenverbund nach einer Erhitzung bei einer Oberflächenschutzfolie aus dem Stand der Technik (Bläschenbildung) sowie
- Fig. 3: einen Schichtenverbund nach einer Erhitzung bei einer erfindungsgemäßen Oberflächenschutzfolie (keine Bläschenbildung).

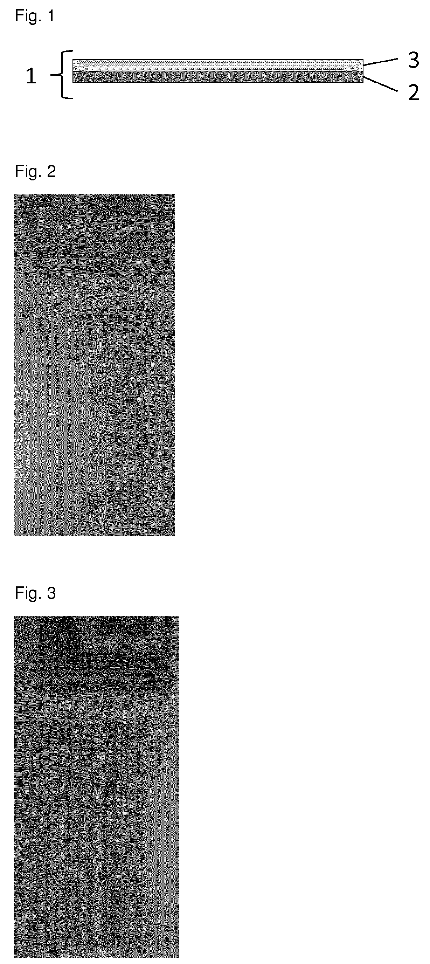

Figur 1 zeigt den Schichtenaufbau einer erfindungsgemäßen Oberflächenschutzfolie 1. Sie umfasst eine Trägerschicht 3 und eine Adhäsionsschicht 2, welche zur Adhäsion an der zu schützenden Oberfläche dient. Die Adhäsionsschicht 2 ist im aufgebrachten Zustand der zu schützenden Oberfläche zugewandt. Sie ist des Weiteren so ausgebildet, dass sie auch nach einer Erhitzung (über 100° C) möglichst rückstandsfrei von der zu schützenden Oberfläche entfernt werden kann.

### Beispiel für eine erfindungsgemäße Schutzfolie:

Die Trägerschicht 3 besteht aus einem Polypropylen (PP). Die Adhäsionsschicht besteht aus einer Mischung aus Styrol-Ethylen-Propylen-Styrol-Block-Copolymer (SEPS) mit einem Styrolanteil von 13%, aus einem Tackifier (adhäsionsförderndes Harz) aus der Gruppe der Hydrocarbonharze und aus einem Polyvinylbutyral (PVB). Das Verhältnis SEPS zu Tackifier zu PVB beträgt 75:15:10.

In einer Vergleichsfolie besteht die Trägerschicht 3 ebenso aus Polypropylen (PP), die Adhäsionsschicht 2 jedoch nur aus einer Mischung aus SEPS und einem Tackifier aus der Gruppe der Hydrocarbonharze im Verhältnis von 80:20.

Die beiden genannten Schutzfolien wurden durch Coextrusion der Trägerschicht 3 und der Adhäsionsschicht 2 hergestellt.

Die beiden Schutzfolien wurden auf Polyamid 12 Folien appliziert. Zum Zwecke der Dekoration der Polyamid 12 Folie mittels Thermodiffusion wurde der Verbund aus Schutzfolie und PA12-Folie auf 160°C in einer Heizpresse aufgeheizt und nach 4 min wieder abgekühlt. Der Folienverbund mit der Schutzfolie ohne PVB in der Adhäsionsschicht zeigt deutliche Bläschenbildung (Figur 2), während der Folienverbund mit PVB in der Adhäsionsschicht keine Bläschenbildung aufweist (Figur 3).

## Patentansprüche

1. Oberflächenschutzfolie (1) bestehend aus zumindest einer Trägerschicht (3) und einer Adhäsionsschicht (2), wobei die Adhäsionsschicht (2) zumindest ein Styrol-Blockcopolymer und ein Polymer enthält, **dadurch gekennzeichnet, dass** das Polymer ein Polyvinylbutyral ist.

2. Oberflächenschutzfolie nach Anspruch 1, **dadurch gekennzeichnet, dass** das Polymer zwischen 5 Gew-% und 50 Gew-%, bevorzugt zwischen 10 Gew-% und 30 Gew-% und besonders bevorzugt zwischen 14 Gew-% und 21 Gew-%, an Hydroxylgruppen umfasst.

3. Oberflächenschutzfolie nach Anspruch 1 oder 2, **dadurch gekennzeichnet, dass** die Adhäsionsschicht einen Anteil zwischen 3 % und 20 %, bevorzugt zwischen 7 % und 15 % und besonders bevorzugt zwischen 9 % und 11 % des Polymers enthält.

4. Oberflächenschutzfolie nach einem der Ansprüche 1 bis 3, **dadurch gekennzeichnet, dass** die Adhäsionsschicht (2) adhäsionsfördernde Harze - vorzugsweise aus der Gruppe der Hydrocarbonharze - enthält.

5. Oberflächenschutzfolie nach einem der Ansprüche 1 bis 4, **dadurch gekennzeichnet, dass** die Oberflächenschutzfolie (1) durch Coextrusion der Trägerschicht (3) und der Adhäsionsschicht (2) hergestellt ist.

## Claims

1. A surface protection film (1) comprising at least a carrier layer (3) and an adhesion layer (2), wherein the adhesion layer (2) contains at least a styrene block copolymer and a polymer, **characterised in that** the polymer is a polyvinyl butyral.

2. A surface protection film according to claim 1 **characterised in that** the polymer includes between 5% by weight and 50% by weight, preferably between 10% by weight and 30% by weight and particularly preferably between 14% by weight and 21% by weight of hydroxyl groups.

3. A surface protection film according to claim 1 or claim 2 **characterised in that** the adhesion layer contains a proportion of between 3% and 20%, preferably between 7% and 15% and particularly preferably between 9% and 11% of the polymer.

4. A surface protection film according to one of claims 1 to 3 **characterised in that** the adhesion layer (2) contains adhesion-promoting resins - preferably from the group of hydrocarbon resins -.

5. A surface protection film according to one of claims 1 to 4 **characterised in that** the surface protection film (1) is produced by co-extrusion of the carrier layer (3) and the adhesion layer (2).

## Revendications

1. Feuille de protection de surface (1) composée d'au moins une couche porteuse (3) et d'une couche d'adhérence (2), dans laquelle la couche d'adhérence (2) comprend au moins un copolymère à blocs de styrène et un polymère, **caractérisée en ce que** le polymère est un polybutyral de vinyle.

2. Feuille de protection de surface selon la revendication 1, **caractérisée en ce que** le polymère comprend entre 5 % en poids et 50 % en poids, de préférence entre 10 % en poids et 30 % en poids et de manière particulièrement préférée entre 14 % en poids et 21 % en poids de groupes hydroxyles.

3. Feuille de protection de surface selon la revendication 1 ou 2, **caractérisée en ce que** la couche d'adhérence comprend une portion entre 3 % et 20 %, de préférence entre 7 % et 15 % et de manière particulièrement préférée entre 9 % et 11 % du polymère.

4. Feuille de protection de surface selon l'une des revendications 1 à 3, **caractérisée en ce que** la couche d'adhérence (2) comprend des résines favorisant l'adhérence - de préférence dans le groupe des résines d'hydrocarbures -.

5. Feuille de protection de surface selon l'une des revendications 1 à 4, **caractérisée en ce que** la feuille de protection de surface (1) est produite par coextrusion de la couche porteuse (3) et de la couche d'adhérence (2).
